# EUROPEAN PATENT SPECIFICATION

(11) **EP 1 795 441 B1**
(45) Date of publication and mention of the grant of the patent: **11.02.2009**
(21) Application number: 05027128.7
(22) Date of filing: 12.12.2005
(51) Int. Cl.: B62J 15/02

(54) **Detachable fastening apparatus for front fork accessories of bicycles**
Vorrichtung zur lösbaren Befestigung von Zubehörteilen auf Fahrrad -Vorderradgabeln
Fixation amovible pour accessoires sur la fourche avant de bicyclette

(43) Date of publication of application: 13.06.2007
(73) Proprietor: Sunny Wheel Industrial Co. Ltd., No. 50, San Yi St. Yihsing Tsun Hsiushui Hsiang Changhua (TW)
(72) Inventor: Hsu, Kuo-Chung, Hsiushui Hsiang, Changhua (TW)
(74) Representative: LOUIS, PÖHLAU, LOHRENTZ

(56) References cited:
- DE-U1- 9 108 780
- DE-U1-6202004 018 57
- PATENT ABSTRACTS OF JAPAN vol. 2000, no. 16, 8 May 2001 (2001-05-08) -& JP 2001 018872 A (OGK GIKEN KK), 23 January 2001 (2001-01-23)

## Description

### BACKGROUND OF THE INVENTION

### 1. Field of the Invention

The invention relates to a detachable fastening apparatus for front fork accessories of bicycles and particularly to a fastening apparatus to form a fast fastening or unfastening between a bicycle accessory and a front fork to facilitate fast installation or removing of the accessory.

### 2. Description of the Prior Art

Users of modem bicycles often install desired accessories such as a fender, knapsack bracket or the like according to their requirements. Installation and removing of the accessories encounter some problems, notably: 1. inconvenience in the installation and removing, and 2. lack a common coupling structure for fastening the accessories to the bicycle frame, especially on the front fork. For instance, EP1029777, EP1188652 and EP1435323 (called prior art hereinafter) disclose techniques that have a thrust element to be coupled with a bicycle accessory (fender) through a flute or track to achieve fast installation or removing. The prior art is applicable only for installation of some specific accessories such as the fender. Moreover, their structure cannot withstand the accessories of a heavier loading such as knapsack brackets. In addition, coupling through the flute or track in a parallel manner often incurs a greater gap between the flute (or track) and the coupling element after the bicycle has been used in rough and bumping conditions for a period of time. As a result, the fender sways and generates noise. It becomes an annoyance to the users.

The DE 20 2004 018 576 U1 describes a bicycle fender anchoring apparatus according to the preamble of claim 1, comprising a bracing assembly and a fast unlatching assembly, wherein the bracing assembly is anchored in a front fork tube through a forced coupling with the fast unlatching assembly; and the fast unlatching assembly includes an eccentric handle which has an eccentric cam and a bolt, the holt running through an aperture of a fender and having one end engaged with the bracing assembly to form a tight coupling to anchor the fender.

### SUMMARY OF THE INVENTION

In view of the aforesaid problems, the present invention aims to provide a detachable fastening apparatus for front fork accessories of bicycles to facilitate fast fastening or removing of a bicycle accessory. It includes at least a packing means and a coupling dock located on the accessory. The packing means has a rotary latch disk. The packing means is located and anchored in a front fork tube. The rotary latch disk can be swiveled to latch on the coupling dock to achieve fast installation and removing of the accessory.

The packing means includes a thrust member, a contracting sleeve, a base, the rotary latch disk, an elastic element and an anchor seat. The thrust member is fastened by a bolt to ram the contracting sleeve outwards to anchor the packing means in the front fork tube of the bicycle.

The rotary latch disk has a handle, an opening in the center and two opposing arched slots on the top surface to be wedged in by two detent struts on the bottom of the base to limit swiveling of the rotary latch disk.

The rotary latch disk further has one or more latch element which has a trough on one side to form a latch edge.

The coupling dock has a circular recess in the center and one or more holding trough on the peripheral side of the circular recess, and a latch hole on one side of the holding trough.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is an exploded view of the invention.
FIG. 2 is another exploded view of the invention.
FIG. 2A is another perspective view of the base.
FIG. 2B is another perspective view of the rotary latch disk.
FIG. 3 is a perspective view of the invention.
FIG. 4 is a sectional view of the invention.
FIG. 5 is a schematic view of the invention in an operating condition.
FIG. 6 is a schematic view of the invention in another operating condition.
FIG. 7 is a schematic view of the invention in yet another operating condition.
FIG. 8 is a schematic view of another embodiment of the invention.
FIG. 9 is a schematic view of another embodiment of the invention in a use condition.

### DESCRIPTION OF THE PPEFERRED EMBODIMENTS

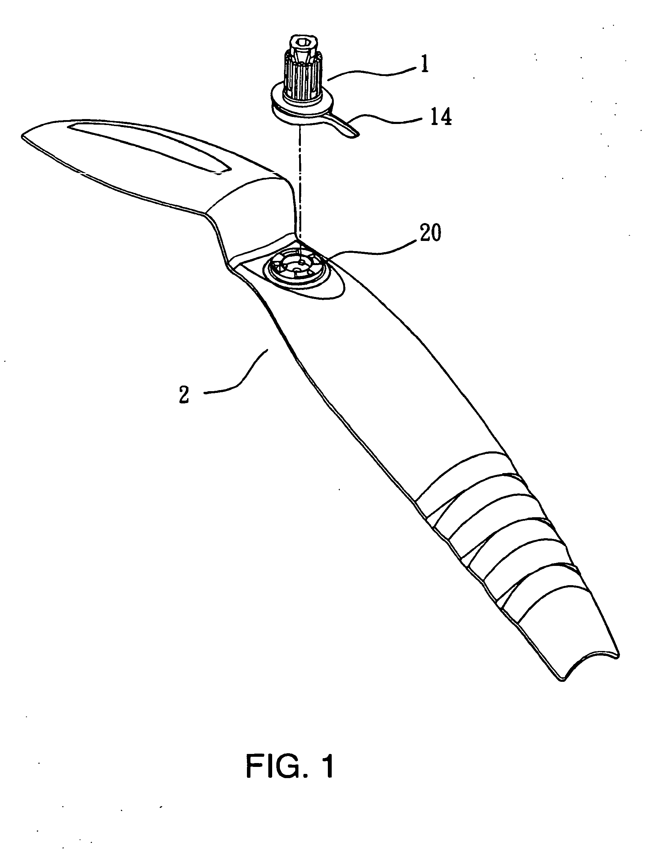

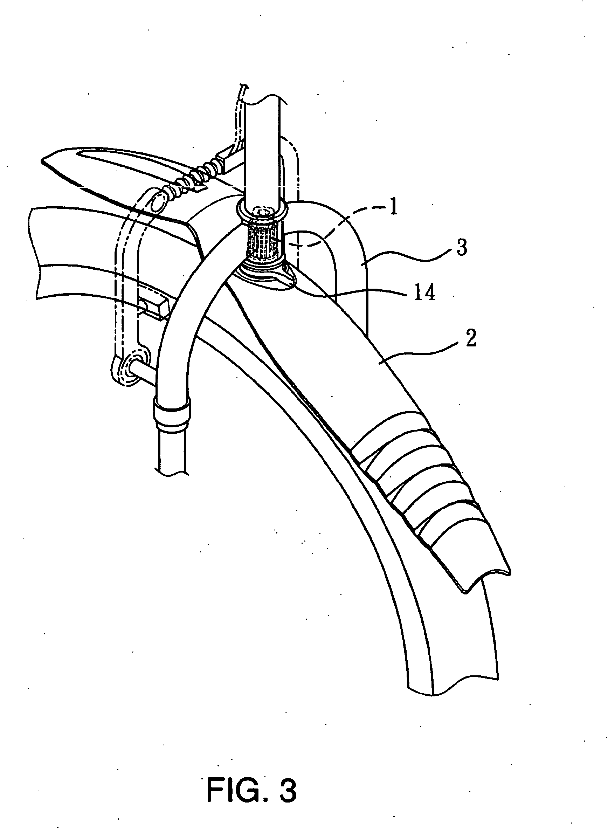

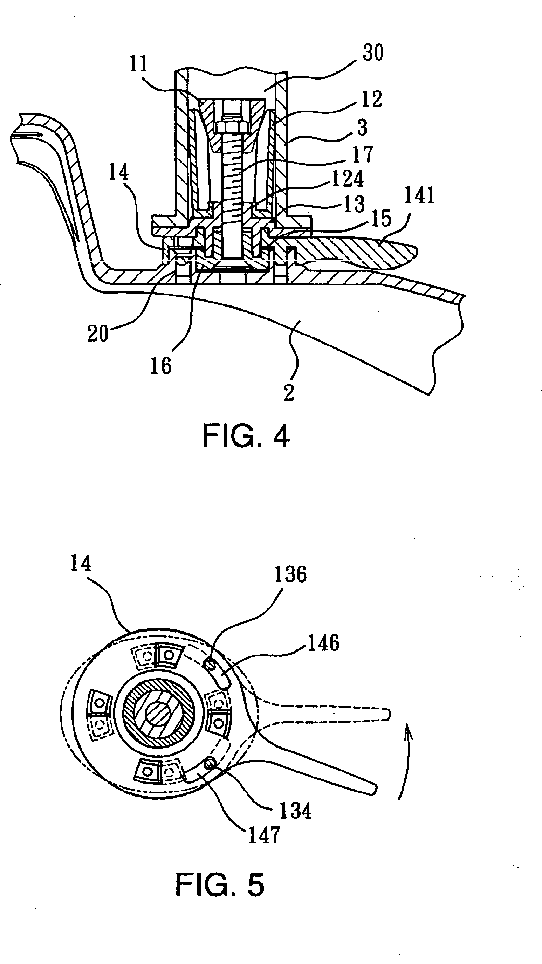

Referring to FIG. 1, the detachable fastening apparatus for front fork accessories according to the invention includes a packing means 1 and a coupling dock 20 located on an accessory 2. The packing means 1 has a rotary latch disk 14 to be fastened to the coupling dock by swiveling and a upper end to be anchored in a tube 30 of a front fork 3 by thrusting (also referring to FIGS. 3 and 4).

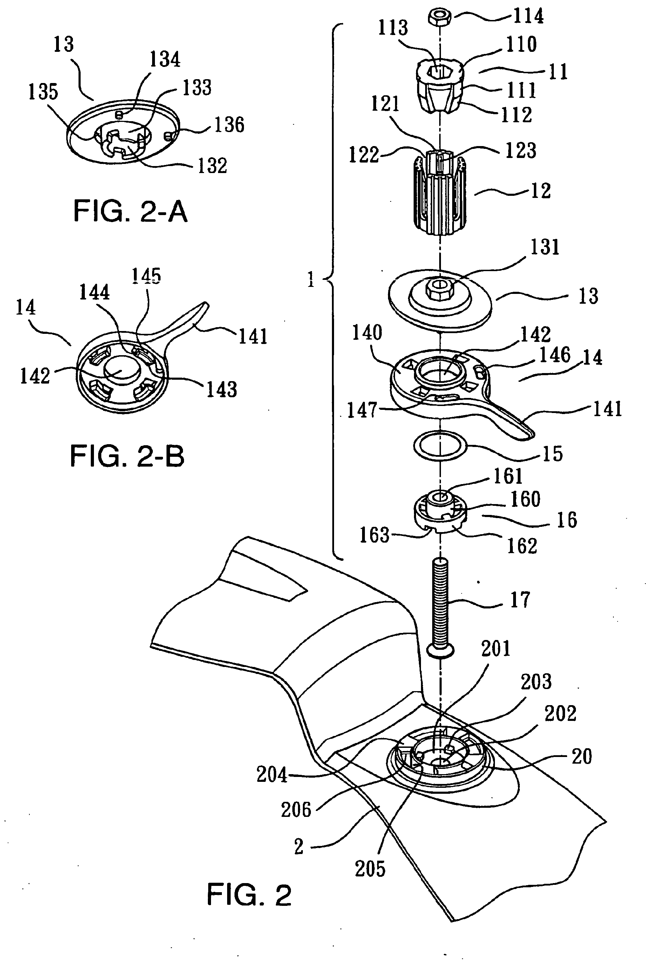

Referring to FIG. 2, the packing means 1 includes a thrust member 11, a contracting sleeve 12, a base 13, the rotary latch disk 14, an elastic element 15 and an anchor seat 16.

The thrust member 11 has a conical body 111 with one or more ribs 111 on the periphery, a through hole 113 in the center and a nut 114 held on a upper end. Each rib 111 has a sloped surface 112 on a lower portion.

The contracting sleeve 12 has one or more slots 122 on the periphery and a polygonal hole 124 on the bottom. Every two neighboring slots 122 are interposed by an elastic reed 121 which has a longitudinal flute 123 in the center of an inner side.

The base 13 has a polygonal strut 131 on the top, a circular hub 133 extended from the bottom (referring to FIG. 2A) with a center hole 132, a circular trough 135 and two detent struts 134 and 136 outside the circular hub 133.

The rotary latch disk 14 has a handle 141, an opening 142 in the center, a top surface 140 with two opposing arched slots 146 and 147 formed thereon, and one or more latch elements 143 on the bottom around the opening 142. Each latch element 143 has a trough 145 on one side to form a latch edge 144 (referring to FIG. 2B).

The anchor seat 16 has a circular shaft 160 on a upper portion to run through the elastic element 15, a circular tray 162 on a lower portion and a through hole 161 in the center to allow a bolt 17 to run through from the bottom to be coupled with the nut 114. The circular tray 162 has one or more anchor notches 163 formed on the periphery of the bottom thereof.

The coupling dock 20 is located on the accessory 2, and has a circular recess 201 with a hole 202 and one or more retaining lugs 203. The circular recess 201 is surrounded by a peripheral top surface 204 which has one or more holding troughs 205 formed thereon. Each holding trough 205 has a latch hole 206 on one side.

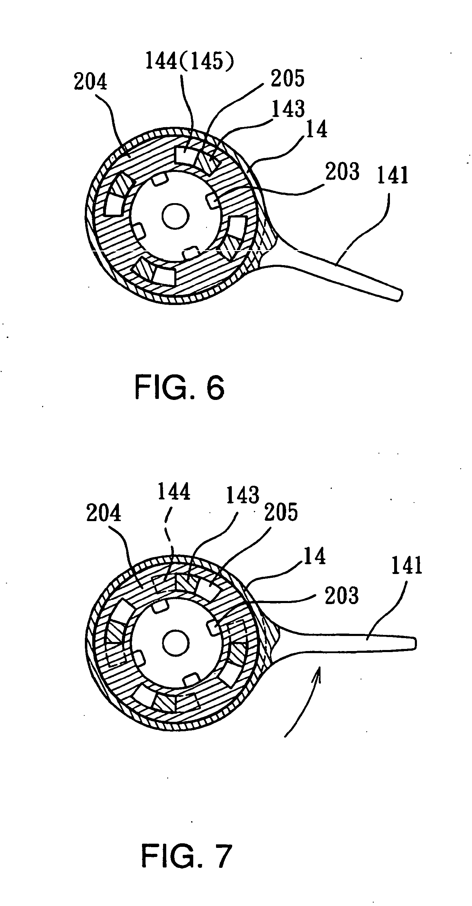

By means of the structure set forth above, when to install the accessory 2 (such as a fender), referring to FIGS. 3 and 4, first, the bolt 17 is run through the through hole 161 of the anchor seat 16, the elastic element 15, the opening 142 of the rotary latch disk 14, the base 13, and the contracting sleeve 12 to be coupled with the nut 114 of the thrust member 11 to form the assembly of the packing means 1; next, place the upper portion of the packing means in the tube 30 of the front fork 3, and fasten the bolt 17 to pull the thrust member 11 downwards to thrust the contracting sleeve 12 to expand outwards until it is tightly held in the tube 30; then align the coupling dock 20 of the accessory 2 with the lower end of the packing means 1 and place the circular tray 162 of the anchor seat 16 in the circular recess 201 of the coupling dock 20 with the anchor notches 163 wedging by the retaining lugs 203 to form an anchoring condition; meanwhile, the latch elements 143 of the rotary latch disk 14 also are wedged in the holding troughs 205 of the coupling dock 20 (as shown in FIG. 6); push and turn the handle 141 with a finger to swivel the rotary latch disk 14, the two arched slots 146 and 147 are turned and stopped by the two detent struts 134 and 136 of the base 13 (as shown in FIG. 5), hence the rotary latch disk 14 can be swiveled to correctly position the latch edge 144 in the latch hole 206 of the coupling dock 20 to form a coupling condition (as shown in FIG. 7). On the other hand, to remove the accessory 2, swivel the rotary latch disk 10 in the opposite direction, the packing means 1 can be disengaged with the coupling dock 20 and be removed.

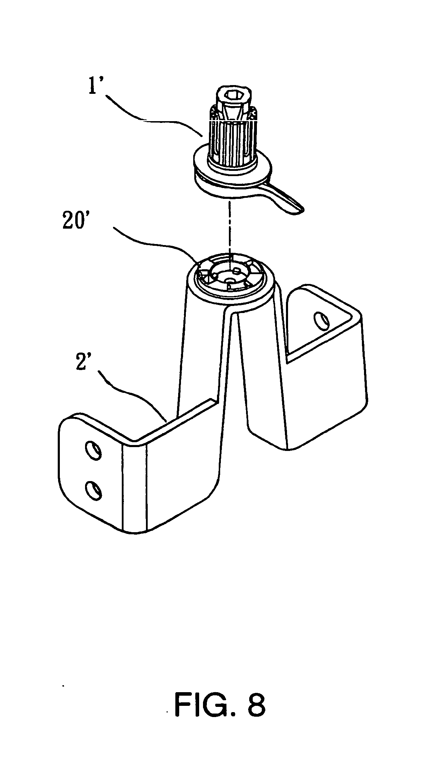

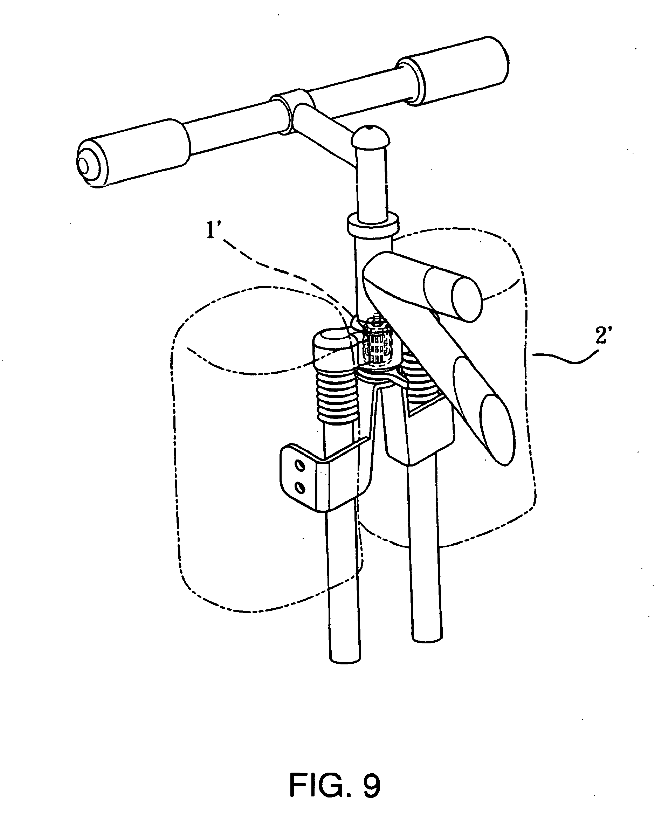

Refer to FIGS. 8 and 9 for another embodiment of the invention for holding a knapsack bracket 2'. First, the packing means 1' is installed in the tube of the front fork as the previous embodiment does. The knapsack bracket 2' is fastened to a coupling dock 20' to be coupled with the packing means 1'. Installation and removing operations are same as the previous embodiment.

In summary, the invention can provide fast assembly and installation and removing of the bicycle accessories (such as fenders, knapsack brackets and the like) with the front fork of the bicycle. It offers a significant improvement over the conventional techniques.

## Claims

1. A detachable fastening apparatus for front fork accessories of bicycles, comprising at least a packing means (1) and a coupling dock (20) on an accessory (2), the packing means (1) including a thrust member (11) and a contracting sleeve (12) and having a rotary element (14) to be fastened to the coupling dock (20) by swiveling and a upper portion to be anchored in a tube (30) of a front fork (3) by pulling the thrust member (11) downwardly to thrust the contracting sleeve (12) to expand outwards until it is tightly held in the tube 30
**characterized in**
**that** the rotary element (14) is a rotary latch disk (14) having an opening in the center and at least one latch element (143) on the bottom around the opening and
**that** by swiveling of the rotary latch disk (14) the packing means (1) can be disengaged with the coupling dock (20) and be removed.

2. The detachable fastening apparatus of claim 1,
**characterized in**
**that** the packing means (1) includes a base (13), the rotary latch disk (14), an elastic element (15) and an anchor seat (16).

3. The detachable fastening apparatus of claim 1,
**characterized in**
**that** the base (13) has two detent struts (134, 136) on the bottom thereof.

4. The detachable fastening apparatus of claim 1,
**characterized in**
**that** the anchor seat (16) has a circular tray (162) on a lower portion and at leat one anchor notch (163) on the periphery of the bottom thereof.

5. The detachable fastening apparatus of claim 1,
**characterized in**
**that** the rotary latch disk (14) has a top surface which has two opposing arched slots (146,147) formed thereon.

6. The detachable fastening apparatus of claim 1,
**characterized in**
**that** the latch element (143) has a trough on one side to form a latch edge (144).

7. The detachable fastening apparatus of claim 1,
**characterized in**
**that** the coupling dock (20) has a top surface which has at least one holding trough (205) formed on the periphery thereof

8. The detachable fastening apparatus of claim 7,
**characterized in**
**that** the holding trough (205) has a latch hole (206) on one side.

9. The detachable fastening apparatus of claim 7,
**characterized in**
**that** the coupling dock (20) has a circular recess (201) in the center, the recess (201) having a hole in the center and at least one retaining lug (203).

## Patentansprüche

1. Lösbare Befestigungsvorrichtung für Vorderradzubehörteile von Fahrrädern, mit wenigstens einem Stopfenmittel (1) und einem Ankopplungselement (20) an einem Zubehörteil (2), wobei das Stopfenmittel (1) ein Schubelement (11) und eine Kontraktionshülse (12) enthält und ein Drehelement (14), das an dem Ankopplungselement (20) durch Schwenken zu befestigen ist, sowie einen oberen Abschnitt besitzt, der in einem Rohr (30) einer Vorderradgabel (3) zu verankern ist, indem das Schubelement (11) nach unten gezogen wird, um die Kontraktionshülse (20) zu schieben, damit sie sich nach außen ausdehnt, bis sie in dem Rohr (30) fest gehalten wird,
**dadurch gekennzeichnet,**
**dass** das Drehelement (14) eine Drehklinkenscheibe (14) ist, die in der Mitte eine Öffnung und an der Unterseite um die Öffnung wenigstens ein Klinkenelement (143) besitzt; und
**dass** durch Schwenken der Drehklinkenscheibe (14) das Stopfenmittel (1) von dem Ankopplungselement (20) gelöst wird und entfernt werden kann.

2. Lösbare Befestigungsvorrichtung nach Anspruch 1,
**dadurch gekennzeichnet,**
**dass** das Stopfenmittel (1) eine Basis (13), die Drehklinkenscheibe (14), ein elastisches Element (15) und einen Ankersitz (16) enthält.

3. Lösbare Befestigungsvorrichtung nach Anspruch 1,
**dadurch gekennzeichnet,**
**dass** die Basis (13) an ihrer Unterseite zwei Anschlagbeine (134, 136) besitzt.

4. Lösbare Befestigungsvorrichtung nach Anspruch 1,
**dadurch gekennzeichnet,**
**dass** der Ankersitz (16) an einem unteren Abschnitt einen kreisförmigen Boden (162) und am Umfang seiner Unterseite wenigstens eine Ankerkerbe (163) besitzt.

5. Lösbare Befestigungsvorrichtung nach Anspruch 1,
**dadurch gekennzeichnet,**
**dass** die Drehklinkenscheibe (14) eine obere Oberfläche besitzt, in der zwei gegenüberliegende gekrümmte Schlitze (146, 147) gebildet sind.

6. Lösbare Befestigungsvorrichtung nach Anspruch 1,
**dadurch gekennzeichnet,**
**dass** das Klinkenelement (143) auf einer Seite eine Rinne besitzt, um eine Klinkenkante (144) zu bilden.

7. Lösbare Befestigungsvorrichtung nach Anspruch 1,
**dadurch gekennzeichnet,**
**dass** das Ankopplungselement (20) eine obere Oberfläche besitzt, die wenigstens eine an ihrem Umfang ausgebildete Halterinne (205) besitzt.

8. Lösbare Befestigungsvorrichtung nach Anspruch 7,
**dadurch gekennzeichnet,**
**dass** die Halterinne (205) auf einer Seite ein Klinkenloch (206) besitzt.

9. Lösbare Befestigungsvorrichtung nach Anspruch 7,
**dadurch gekennzeichnet,**
**dass** das Ankopplungselement (20) in der Mitte eine kreisförmige Aussparung (201) besitzt, wobei die Aussparung (201) in der Mitte ein Loch besitzt und wenigstens einen Rückhalteansatz (203) aufweist.

## Revendications

1. Dispositif de fixation détachable pour des accessoires de fourche avant de bicyclettes, comprenant au moins des moyens formant garniture (1) et un support d'accouplement (20) sur un accessoire (2), les moyens formant garniture (1) comprenant un élément de poussée (11) et un manchon de contraction (12) et comportant un élément rotatif (14) destiné à être fixé au support d'accouplement (20) en tournant et une partie supérieure destinée à être ancrée dans un tube (30) d'une fourche avant (3) en tirant l'élément de poussée (11) vers le bas pour pousser le manchon de contraction (12) de manière à ce qu'il s'élargisse vers l'extérieur jusqu'à ce qu'il soit maintenu étroitement dans le tube 30,
**caractérisé en ce que**
l'élément rotatif (14) est un disque de verrouillage rotatif (14) comportant une ouverture au centre et au moins un élément de verrouillage (143) sur le fond autour de l'ouverture, et
en tournant le disque de verrouillage rotatif (14), les moyens formant garniture (1) peuvent être désengagés du support d'accouplement (20) et retirés.

2. Dispositif de fixation détachable selon la revendication 1,
**caractérisé en ce que**
les moyens formant garniture (1) comprennent une base (13), le disque de verrouillage rotatif (14), un élément élastique (15) et un siège d'ancrage (16).

3. Dispositif de fixation détachable selon la revendication 1,
**caractérisé en ce que**
la base (13) comporte deux broches de verrouillage (134, 136) sur le fond de celle-ci.

4. Dispositif de fixation détachable selon la revendication 1,
**caractérisé en ce que**
le siège d'ancrage (16) comporte un plateau circulaire (162) sur une partie inférieure et au moins une encoche d'ancrage (163) sur la périphérie de son fond.

5. Dispositif de fixation détachable selon la revendication 1,
**caractérisé en ce que**
le disque de verrouillage rotatif (14) comporte une surface supérieure qui comporte deux fentes en forme d'arc (146, 147) opposées formées sur celle-ci.

6. Dispositif de fixation détachable selon la revendication 1,
**caractérisé en ce que**
l'élément de verrouillage (143) comporte un creux d'un côté pour former un bord de verrouillage (144).

7. Dispositif de fixation détachable selon la revendication 1,
**caractérisé en ce que**
le support d'accouplement (20) comporte une surface supérieure qui comporte au moins un creux de support (205) formé sur sa périphérie.

8. Dispositif de fixation détachable selon la revendication 7,
**caractérisé en ce que**
le creux de support (205) comporte un trou de verrouillage (206) d'un côté.

9. Dispositif de fixation détachable selon la revendication 7,
**caractérisé en ce que**
le support d'accouplement (20) comporte un évidement circulaire (201) au centre, l'évidement (201) comportant un trou au centre et au moins une patte de retenue (203).
